(19) Europäisches Patentamt / European Patent Office / Office européen des brevets

(11) **EP 3 550 761 B1**

(12) **EUROPEAN PATENT SPECIFICATION**

(45) Date of publication and mention of the grant of the patent:
**12.04.2023 Bulletin 2023/15**

(21) Application number: **18745339.4**

(22) Date of filing: **24.01.2018**

(51) International Patent Classification (IPC):
**H04L 1/00** (2006.01)  **H04L 5/00** (2006.01)

(52) Cooperative Patent Classification (CPC):
**H04L 1/0038; H04L 5/0005; H04L 5/0058; H04W 72/23**

(86) International application number:
**PCT/CN2018/074035**

(87) International publication number:
**WO 2018/137667 (02.08.2018 Gazette 2018/31)**

(54) **DATA TRANSMISSION METHOD AND DEVICE, AND INFORMATION TRANSMISSION METHOD AND DEVICE**

DATENÜBERTRAGUNGSVERFAHREN UND -VORRICHTUNG SOWIE INFORMATIONSÜBERTRAGUNGSVERFAHREN UND -VORRICHTUNG

PROCÉDÉ ET DISPOSITIF DE TRANSMISSION DE DONNÉES, ET PROCÉDÉ ET DISPOSITIF DE TRANSMISSION D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2017 CN 201710057505**

(43) Date of publication of application:
**09.10.2019 Bulletin 2019/41**

(73) Proprietor: **Huawei Technologies Co., Ltd.**
**Longgang District**
**Shenzhen, Guangdong 518129 (CN)**

(72) Inventors:
• **XU, Xiuqiang**
  **Shenzhen, Guangdong 518129 (CN)**
• **WU, Yiqun**
  **Shenzhen, Guangdong 518129 (CN)**
• **CHEN, Yan**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**CN-A- 103 518 398**  **CN-A- 105 979 597**
**CN-A- 107 734 676**

• ZTE ET AL: "URLLC and eMBB frame structure and multiplexing", 3GPP DRAFT; R1-1611709 URLLC AND EMBB FS AND MULTIPLEXING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 5 November 2016 (2016-11-05), XP051190099, Retrieved from the Internet: URL:http://www.3gpp.org/ftp/tsg_ran/WG1_RL 1/TSGR1_87/Docs/ [retrieved on 2016-11-05]
• ZTE ET AL: "URLLC and eMBB frame structure and multiplexing", 3GPP DRAFT; R1-1608957 URLLC AND EMBB FS AND MULTIPLEXING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 1 October 2016 (2016-10-01), XP051159212, Retrieved from the Internet: URL:http://www.3gpp.org/ftp/tsg_ran/WG1_RL 1/TSGR1_86b/Docs/ [retrieved on 2016-10-01]

- **INTERDIGITAL COMMUNICATIONS: "Scheduling and support for service multiplexing", 3GPP DRAFT; R1-1612316, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051176265, Retrieved from the Internet: URL:http://www.3gpp.org/ftp/Meetings_3GPP_ SYNC/RAN1/Docs/ [retrieved on 2016-11-13]**

**Description**

**TECHNICAL FIELD**

This application relates to the communications field, and more specifically, to a data transmission method and apparatus in the communications field.

**BACKGROUND**

Enhanced mobile broadband (enhanced Mobile Broadband, eMBB) communications and ultra-reliable and low latency communications (ultra-reliable and low latency communications, URLLC) are two important scenarios in a future network system. Based on an existing mobile broadband service scenario, the eMBB can further improve performance such as system capacity, and enhance user experience, and eMBB services are mainly traffic-intensive mobile broadband services such as a 3D/an ultra high definition video. URLLC services are mainly unmanned driving, industrial automation, and the like that require ultra-reliable and low latency connections. Compared with eMBB service data, URLLC service data usually features a smaller data packet, for example, a size of the data packet ranges from dozens of bytes to hundreds of bytes.

Because the URLLC service data features random arrival, when the eMBB service data is transmitted in uplink by using a time-frequency resource, the URLLC service data may also be transmitted in uplink by using the time-frequency resource. In this case, the URLLC service data and the eMBB service data interfere with each other during reception.

Document ZTE ET AL, "URLLC and eMBB frame structure and multiplexing", vol. RAN WG1, no. Lisbon, Portugal; 20161010 - 20161014, (20161105), 3GPP DRAFT; R1-1611709 URLLC AND EMBB FS AND MULTIPLEXING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/tsg_ran/WG1-RL1/TSGR1_87/Docs/, (20161105), XP051190099 describes a basic frame structure design for eMBB and URLLC services based on a concept of subframe, slot and mini-slot.

Document ZTE ET AL, "URLLC and eMBB frame structure and multiplexing", vol. RAN WG1, no. Lisbon, Portugal; 20161010 - 20161014, (20161001), 3GPP DRAFT; R1-1608957 URLLC AND EMBB FS AND MULTIPLEXING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/tsg_ran/WG1_RL1/TSGR1_86b/Docs/, (20161001), XP051159212 describes a frame structure for eMBB and URLLC based on slot or mini-slot.

Document INTERDIGITAL COMMLTNICATIONS, "Scheduling and support for service multiplexing", vol. RAN WG1, no. Reno, USA; 20161114 - 20161118, (20161113), 3GPP DRAFT; R1-1612316, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: http://www.3gpp.org/ftp/Meetings_3GPP_SYNC/RAN1/Docs/, (20161113), XP051176265 discusses downlink and uplink scheduling impacts onto new radio (NR) resource allocation for the case that eMBB and URLLC type of transmissions are being multiplexed onto NR carriers.

**SUMMARY**

This application provides a data transmission method and apparatus according to the independent claims, to reduce interference caused by one type of data to another type of data when same time-frequency resources are multiplexed for data transmission.

According to a first aspect, this application provides a data transmission method, and the method includes:

obtaining time-frequency resources used to transmit first data, where some or all of the time-frequency resources are further used to transmit second data;
obtaining a transmission parameter used to transmit the second data;
determining, based on the transmission parameter, a size of a to-be-encoded data block used to encode the first data;
encoding the first data based on the size of the to-be-encoded data block; and
mapping a data block obtained through the encoding to the time-frequency resources;

wherein the transmission parameter comprises at least one of a size of a to-be-encoded data block used to transmit the second data, a quantity of transmission time intervals TTIs used to transmit the second data, a size of each TTI, a first frequency resource used to transmit the second data in each TTI, a time-frequency resource occupied by a control channel in each TTI, and a time-frequency resource occupied by a pilot in each TTI; and
wherein the determining, based on the transmission parameter, a size of a to-be-encoded data block used to encode the first data comprises:

> determining, based on the size of each TTI and the first frequency resource used to transmit the second data in each TTI, a size of a to-be-encoded data block corresponding to each TTI; and
>
> determining, based on the size of the to-be-encoded data block corresponding to each TTI, the size of the to-be-encoded data block used to encode the first data.

In this aspect of this application, a TTI represents a time interval for one time of data transmission, and is also a minimum scheduling period. In 5G, eMBB service data and URLLC service data are usually transmitted by using TTIs of different sizes.

In this aspect of this application, a data block transmitted in a TTI is referred to as a transmit block, and a code block may be obtained after a transmit block in a TTI is modulated and encoded.

It should be understood that the data transmission method in this aspect of this application may be used in an uplink data transmission scenario, or may be used in a downlink data transmission scenario. In the uplink data transmission scenario, the data sending device may be a terminal device. In the downlink data transmission scenario, the data sending device may be a network device.

It should be further understood that the first data in this aspect of this application may be eMBB service data, the second data may be URLLC service data, and the first data and the second data may be transmitted by a same data sending device, or may be transmitted by different data sending devices.

Optionally, the transmission parameter may include the size of the to-be-encoded data block used to transmit the second data, and the data sending device may use the size of the to-be-encoded data block used by the second data as the size of the to-be-encoded data block used to encode the first data.

Optionally, if the TTIs used to transmit the second data occupy all time domain resources of the first data, the transmission parameter may include only the size of the TTI, and the data sending device may determine, based on the size of the TTI, a size of a to-be-encoded data block used to encode the second data, and use the size of the to-be-encoded data block used to encode the second data as the size of the to-be-encoded data block used to encode the first data.

It should be understood that, in this aspect of this application, all or some of the first frequency resources used to transmit the first data in the TTIs may be used to transmit the second data. This is not limited in this embodiment of this application.

According to the data transmission method provided in this aspect of this application, because the size of the to-be-encoded data block used to encode the first data is determined based on the transmission parameter used to transmit the second data, when the second data is transmitted on the time-frequency resources used to transmit the first data, interference of the second data in the first data is limited to some code blocks of the first data. This reduces the interference of the second data in the first data.

In addition, the data sending device determines, based on the size of each TTI, a frequency domain resource corresponding to each TTI, the time-frequency resource occupied by the control channel in each TTI, and the time-frequency resource occupied by the pilot in each TTI, the size of the to-be-encoded data block used to encode the first data, and encodes and maps the first data based on the size of the to-be-encoded data block. This allows a data receiving device to decode, based on the size of each TTI, the frequency domain resource corresponding to each TTI, the time-frequency resource occupied by the control channel in each TTI, and the time-frequency resource occupied by the pilot in each TTI, both a data block of the first data and a data block of the second data that are received in each TTI, thereby improving data transmission reliability.

In the data transmission method in this aspect of this application, the transmission parameter carries the time-frequency resource occupied by the control channel in each TTI and/or the time-frequency resource occupied by the pilot in each TTI, so that symbols occupied by a pilot and/or a control channel of the second data can be avoided when the first data is transmitted. This avoids affecting normal transmission of the second data.

The transmission parameter may include the quantity of TTIs used to transmit the second data, the size of each TTI, and the first frequency resource used to transmit the second data in each TTI, and the data sending device may determine, based on the size of each TTI and the first frequency resource used to transmit the second data in each TTI, the size of the to-be-encoded data block corresponding to each TTI.

In still another possible implementation, before the determining, based on the size of the to-be-encoded data block corresponding to each TTI, the size of the to-be-encoded data block used to encode the first data, the method further includes: determining, based on the first frequency resource used to transmit the second data in each TTI, a second frequency resource that is in the time-frequency resources and that is not used to transmit the second data; and determining, based on the second frequency resource and TTIs corresponding to the time-frequency resources, a size of a to-be-encoded data block used to encode data that is in the first data and that is transmitted by using the second frequency resource; and correspondingly, the determining, based on the size of the to-be-encoded data block corresponding to each TTI, the size of the to-be-encoded data block used to encode the first data includes: determining, based on the size of the to-be-encoded data block corresponding to each TTI and the size of the to-be-encoded data block used to encode the data that is in the first data and that is transmitted by using the second frequency resource, the size of the to-be-encoded data block used to encode the first data.

In still another possible implementation, the determining, based on the size of each TTI and the first frequency resource used to transmit the second data in each TTI, a size of a to-be-encoded data block corresponding to each TTI includes: determining, based on a first frequency resource used to transmit the second data in an ith TTI in the TTIs, a size of a to-be-encoded data block corresponding to a reference TTI when the ith TTI corresponds to a size of the reference TTI, where i is an integer greater than 0; and determining, based on the size of the to-be-encoded data block corresponding to the reference TTI and a size of the ith TTI, a size of a to-be-encoded data block corresponding to the ith TTI.

It should be understood that the reference TTI may be, for example, a TTI of 14 symbols corresponding to a TBS in the prior art.

In still another possible implementation, the size of the to-be-encoded data block corresponding to the ith TTI is $N_{i-CBS}$, and $N_{i-CBS}$ is determined according to the following formula:

$$N_{i-CBS} = floor\left(N_{j-CBS} \cdot N_{i-OS} / N_{j-OS}\right),$$

where

$N_{j-OS}$ is the size of the reference TTI, $N_{i-OS}$ is the size of the ith TTI, $N_{j-CBS}$ is the size of the to-be-encoded data block corresponding to the reference TTI, and $floor(\cdot)$ indicates rounding down.

In still another possible implementation, the determining, based on the size of each TTI and the first frequency resource used to transmit the second data in each TTI, a size of a to-be-encoded data block corresponding to each TTI includes: determining, based on a size of an ith TTI in the TTIs, the first frequency resource used to transmit the second data in the ith TTI, and a pre-stored first mapping relationship, a size of a to-be-encoded data block corresponding to the ith TTI, where the first mapping relationship includes a mapping relationship between a size of a TTI and a frequency resource and a size of a to-be-encoded data block, and i is an integer greater than 0.

Optionally, the data sending device may pre-store a TBS table, where the TBS table includes the mapping relationship between a size of a TTI and a frequency resource and a size of a to-be-encoded data block.

In still another possible implementation, the obtaining time-frequency resources used to transmit first data includes: receiving first indication information sent by a network device, where the first indication information is used to indicate the time-frequency resources.

Optionally, the data sending device may be a terminal device, and the terminal device may receive the first indication information that is sent by the network device and that is used to indicate the time-frequency resources.

In still another possible implementation, the first indication information further includes frequency hopping information, where the frequency hopping information is used to indicate a distribution status in terms of time of a frequency resource that is in the time-frequency resources and that is used to transmit the second data.

Optionally, the first indication information further includes frequency hopping information, and the data sending device may learn, based on the frequency hopping information, the size of each TTI and a frequency resource used to transmit the second data in each TTI.

In still another possible implementation, the obtaining a transmission parameter used to transmit the second data includes: receiving the transmission parameter sent by the network device.

In still another possible implementation, the method further includes: receiving second indication information sent by the network device, where the second indication information is used to instruct to enable the time-frequency resources to transmit the first data.

According to the data transmission method provided in this aspect of this application, after receiving the second indication information, the data sending device enables the time-frequency resources to transmit the first data, that is, determines, based on the transmission parameter used to transmit the second data, the size of the to-be-encoded data block used to encode the first data, and encodes and maps the first data based on the size of the to-be-encoded block. If the data sending device does not receive the second indication information, the data sending device encodes and maps the first data based on a size of a to-be-encoded data block used to transmit the first data in the prior art.

In still another possible implementation, the method further includes: sending, to a device that is to receive the first data, information used to indicate the time-frequency resources; and/or sending the transmission parameter to the device that is to receive the first data.

Optionally, the data sending device may be a network device. After determining the time-frequency resources and the transmission parameter that is used to transmit the second data, the network device may send, to a terminal device, the transmission parameter and/or the information used to indicate the time-frequency resources, so that the terminal device encodes and maps the first data based on the indication information and the transmission parameter.

According to a second aspect, this application provides an information transmission method, and the method includes:

> determining, by a network device, time-frequency resources used to transmit first data, where some or all of the time-frequency resources are further used to transmit second data;
> sending, to a device that is to transmit the first data, information used to indicate the time-frequency resources, and a transmission parameter used to transmit the second data; and
> performing, by the device that is to transmit the first data, the data transmission method according to the first aspect.

According to the data transmission method provided in this aspect of this application, after determining the time-frequency resources and the transmission parameter that is used to transmit the second data, the network device may send, to the device that is to transmit the first data, the transmission parameter and/or the information used to indicate the time-frequency resources, so that the device encodes and maps the first data based on the indication information and the transmission parameter.

In a possible implementation, the transmission parameter includes at least one of a size of a to-be-encoded data block used to transmit the second data, a quantity of transmission time intervals TTIs used to transmit the second data, a size of each TTI, a first frequency resource used to transmit the second data in each TTI, a time-frequency resource occupied by a control channel in each TTI, and a time-frequency resource occupied by a pilot in each TTI.

According to a third aspect, this application provides a data transmission apparatus, configured to perform the method in the first aspect or in the various implementations of the first 7

According to a fourth aspect, this application provides a computer readable medium, configured to store a computer program, where the computer program includes instructions used to perform the method in the first aspect or in the various implementations of the first aspect.

According to a fifth aspect, this application provides a computer program product that includes instructions, and when the computer program product runs on a computer, the computer is enabled to perform the method in the first aspect or in the various implementations of the first aspect.

## DESCRIPTION OF DRAWINGS

> FIG. 1 is a schematic architectural diagram of a wireless communications system to which embodiments of this application are applied;
> FIG. 2 is a schematic flowchart of a data transmission method according to an embodiment of this application;
> FIG. 3 is a schematic flowchart of an information transmission method according to an embodiment of this application;
> FIG. 4 is a schematic diagram of a multiplexed resource according to an embodiment of this application;
> FIG. 5 is a schematic diagram of another multiplexed resource according to an embodiment of this application;
> FIG. 6 is a schematic structural diagram of a pilot location according to an embodiment of this application;
> FIG. 7 is a schematic structural diagram of a control channel location according to an embodiment of this application;
> FIG. 8 is a schematic block diagram of a data transmission apparatus according to an embodiment of this application;
> FIG. 9 is a schematic block diagram of another information transmission apparatus according to an embodiment of this application;
> FIG. 10 is a schematic block diagram of still another data transmission apparatus according to an embodiment of this application; and
> FIG. 11 is a schematic block diagram of another information transmission apparatus according to an embodiment of this application.

## DESCRIPTION OF EMBODIMENTS

The following describes technical solutions of this application with reference to the accompanying drawings.

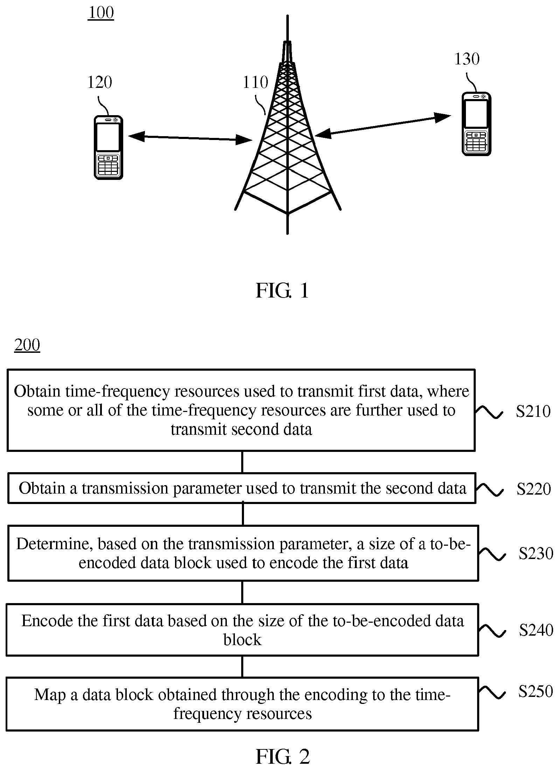

FIG. 1 shows a wireless communications system 100 to which the embodiments of this application are applied. The wireless communications system 100 may include at least one network device. FIG. 1 shows a network device 110. The network device 110 may provide communication coverage for a specific geographic area, and may communicate with a terminal device located in the coverage area. The network device 110 may be a base transceiver station (base transceiver station, BTS) in a GSM system or a CDMA system, a nodeB (nodeB, NB) in a WCDMA system, an evolved NodeB (evolved NodeB, eNB or eNodeB) in an LTE system, or a radio controller in a cloud radio access network (cloud radio access network, CRAN). The network device may alternatively be a relay station, an access point, an in-vehicle device, a wearable device, a network-side device in a future 5G network, a network device in a future evolved public land mobile network (public land mobile network, PLMN), or the like.

The wireless communications system 100 further includes a plurality of terminal devices located in coverage of the network device 110. FIG. 1 shows a terminal device 120 and a terminal device 130.

FIG. 1 shows one network device and two terminal devices as an example. Optionally, the wireless communications system 100 may include a plurality of network devices, and another quantity of terminal devices may be included in coverage of each network device. This is not limited in the embodiments of this application. Optionally, the wireless communications system 100 may further include another network entity, such as a network controller and a mobility management entity. The embodiments of this application are not limited thereto.

It should be understood that, in the embodiments of this application, the terminal device may be mobile or fixed. The first terminal device 120 and the second terminal device 130 may be access terminals, user equipment (user equipment, UE), subscriber units, subscriber stations, mobile stations, mobile consoles, remote stations, remote terminals, mobile devices, user terminals, terminals, radio communications equipment, user agents, user apparatuses, or the like. The access terminal may be a cellular phone, a cordless phone, a Session Initiation Protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, a terminal device in the future 5G network, or a terminal device in the future evolved PLMN.

In the embodiments of this application, a TTI represents a time interval for one time of data transmission, and is a minimum scheduling period. In the 5G, eMBB service data and URLLC service data are usually transmitted by using different TTI sizes. For ease of understanding, in this application, the "eMBB service data" is referred to as "eMBB data", and the "URLLC service data" is referred to as "URLLC data".

In the embodiments of this application, a data transmission device may transmit the eMBB data and/or the URLLC data. Because a data packet of the URLLC data is usually smaller than a data packet of the eMBB data, a TTI of eMBB is usually greater than or equal to a TTI of URLLC.

In the embodiments of this application, a data block transmitted by a data sending device in a TTI is referred to as a transmit block (transmit block, TB), and a size of the transmit block is referred to as a transmit block size (transmit block size, TBS). A code block (code block, CB) may be obtained after a transmit block in a TTI is modulated and encoded.

Before sending data, the data sending device may learn a modulation and coding scheme (modulation and coding, MCS) number of a to-be-transmitted transmit block and a number of a preallocated physical resource block, obtain a corresponding TBS number through querying based on the MCS number, obtain a TBS table corresponding to the TBS number, obtain a TBS from the TBS table based on a quantity of the physical resource blocks, determine a to-be-transmitted TB based on the TBS, perform modulation and coding on the TB based on the MCS of the TB to obtain a CB, and then map the CB to a physical resource corresponding to the number of the physical resource block.

In addition, in the prior art, when a data receiving device is receiving an eMBB CB on an allocated physical resource, if another device multiplexes a part or all of the physical resource to transmit a URLLC CB, because URLLC data interferes with eMBB data received by the data receiving device on the multiplexed part of the physical resource, a code block of the URLLC data interferes with a code block of the received eMBB data. In the prior art, a size of the code block of eMBB is far larger than a size of the code block of the URLLC data. Consequently, the relatively small code block of URLLC interferes with the relatively large data block of the eMBB data. Therefore, a relatively high bit error rate is caused when the code block of the received eMBB data is decoded.

According to a data transmission method in an embodiment of this application, a data sending device can determine a size of a to-be-encoded data block of eMBB data based on a transmission status of URLLC data, and encode and map the eMBB data based on the size of the to-be-encoded data block of the eMBB data. In this case, on a multiplexed part of a physical resource, the size of the to-be-encoded data block of the eMBB data can better match a size of a to-be-encoded data block of the URLLC data. Therefore, when a data receiving device decodes the eMMB data, interference of the URLLC data in the eMBB data is limited to a relatively small data range. This reduces the interference of the URLLC data in the eMBB data.

In addition, when decoding a code block of the URLLC data, a code block of the eMBB data that interferes with the code block needs to be read. Because on the multiplexed part of the physical resource, the size of the to-be-encoded data block of the eMBB data can better match the size of the to-be-encoded data block of the URLLC data, a size of the code block of the eMBB data can also better match a size of the code block of the URLLC data. This reduces a decoding delay generated when the code block of the URLLC data is being decoded.

FIG. 2 is a schematic flowchart of a data transmission method 200 according to an embodiment of this application. The method 200 may be applied to, for example, the wireless communications system shown in FIG. 1. It should be understood that the method 200 may be performed by a data sending device.

S210. Obtain time-frequency resources used to transmit first data, where some or all of the time-frequency resources are further used to transmit second data.

S220. Obtain a transmission parameter used to transmit the second data.

S230. Determine, based on the transmission parameter, a size of a to-be-encoded data block used to encode the first data.

S240. Encode the first data based on the size of the to-be-encoded data block.

S250. Map a data block obtained through the encoding to the time-frequency resources.

It should be understood that the data transmission method in this embodiment of this application may be used in an uplink data transmission scenario, or may be used in a downlink data transmission scenario. In the uplink data transmission scenario, the data sending device may be a terminal device. In the downlink data transmission scenario, the data sending device may be a network device. It should be further understood that the first data in this embodiment of this application may be eMBB data, the second data may be URLLC data, and the first data and the second data may be transmitted by a same data sending device, or may be transmitted by different sending devices.

In this embodiment of this application, the to-be-encoded data block may be a TB, or may be a data block that is obtained by dividing a TB and that is to be input to an encoder.

According to the data transmission method in this embodiment of this application, the data sending device can determine the size of the to-be-encoded data block of the eMBB data based on a transmission status of the URLLC data, and encode and map the eMBB data based on the size of the to-be-encoded data block of the eMBB data. In this case, on a multiplexed part of a physical resource, the size of the to-be-encoded data block of the eMBB data can better match a size of a to-be-encoded data block of the URLLC data. Therefore, when a data receiving device decodes the eMMB data, interference of the URLLC data in the eMBB data is limited to a relatively small data range. This reduces the interference of the URLLC data in the eMBB data.

In addition, when decoding a code block of the URLLC data, a code block of the eMBB data that interferes with the code block needs to be read. Because on the multiplexed part of the physical resource, the size of the to-be-encoded data block of the eMBB data can better match the size of the to-be-encoded data block of the URLLC data, a size of the code block of the eMBB data can also better match a size of the code block of the URLLC data. This reduces a decoding delay generated when the code block of the URLLC data is being decoded.

The transmission parameter in S220 may include at least one of a size of a to-be-encoded data block used to transmit the second data, a quantity of TTIs used to transmit the second data, a size of each TTI, a first frequency resource used to transmit the second data in each TTI, a time-frequency resource occupied by a control channel in each TTI, and a time-frequency resource occupied by a pilot in each TTI. This is not limited in this embodiment of this application.

According to the data transmission method provided in this embodiment of this application, the size of the to-be-encoded data block that is used to encode the first data and that is determined based on at least one of the quantity of TTIs used to transmit the second data, the size of each TTI, the first frequency resource used to transmit the second data in each TTI, the time-frequency resource occupied by the control channel in each TTI, and the time-frequency resource occupied by the pilot in each TTI actually better matches the size of the to-be-encoded data block used to transmit the second data. In addition, the first data is encoded and mapped based on the size of the to-be-encoded data block. This limits the interference of the URLLC data in the eMBB data to a relatively small data range when the eMBB data is received, and can further reduce a decoding delay when the URLLC data is received.

In an embodiment, the transmission parameter may include the size of the to-be-encoded data block used to transmit the second data. The data sending device may determine, based on the size of the to-be-encoded data block used to transmit the second data, the size of the to-be-encoded data block used to encode the first data.

Optionally, in this embodiment of this application, all or some of the first frequency resources used to transmit the first data in the TTIs may be used to transmit the second data. This is not limited in this embodiment of this application.

In an embodiment, the transmission parameter may include the size of each TTI and the first frequency resource used to transmit the second data in each TTI. The data sending device may determine, based on the size of each TTI and the first frequency resource used to transmit the second data in each TTI, a size of a to-be-encoded data block corresponding to each TTI, and determine, based on the size of the to-be-encoded data block corresponding to each TTI, the size of the to-be-encoded data block used to encode the first data.

In another embodiment, if some of the first frequency resources used to transmit the first data in the TTIs are used to transmit the second data, the transmission parameter may include the quantity of TTIs used to transmit the second data, the size of each TTI, and the first frequency resource used to transmit the second data in each TTI. The data sending device may determine, based on the first frequency resource used to transmit the second data in each TTI, a second frequency resource that is in the time-frequency resources and that is not used to transmit the second data, determine, based on the second frequency resource and TTIs corresponding to the time-frequency resources, a size of a to-be-encoded data block used to encode data that is in the first data and that is transmitted by using the second frequency resource, and determine, based on the size of the to-be-encoded data block corresponding to each TTI and the size of the to-be-encoded data block used to encode the data that is in the first data that and that is transmitted by using the second frequency resource, the size of the to-be-encoded data block used to encode the first data.

In still another optional embodiment, if the TTIs used to transmit the second data occupy all time domain resources of the first data, the transmission parameter may include the size of the TTI. Correspondingly, the data sending device may determine, based on the size of the TTI, a size of a to-be-encoded data block used to encode the second data, and determine, based on the size of the to-be-encoded data block used to encode the second data, the size of the to-be-encoded data block used to encode the first data.

Optionally, the data sending device may determine, in different manners, a size of a to-be-encoded data block corresponding to an ith TTI in the TTIs. The following describes in detail a method for determining, by the data sending device, the size of the to-be-encoded data block corresponding to the ith TTI in this embodiment of this application.

In an optional embodiment, the data sending device may determine, based on a first frequency resource used to transmit the second data in the ith TTI in the TTIs, a size of a to-be-encoded data block corresponding to a reference TTI when the ith TTI corresponds to a size of the reference TTI, where i is an integer greater than 0; and determine, based on the size of the to-be-encoded data block corresponding to the reference TTI and a size of the ith TTI, the size of the to-be-encoded data block corresponding to the ith TTI.

For example, the data sending apparatus may determine, based on an MCS index used to transmit the second data in the ith TTI, a TBS index used to transmit the second data in the ith TTI when the ith TTI corresponds to the size of the reference TTI, obtain a TBS table and the first frequency resource used to transmit the second data in the ith TTI, search the TBS table for the size of the to-be-encoded data block corresponding to the reference TTI, and then calculate, based on the size of the to-be-encoded data block corresponding to the reference TTI and the size of the ith TTI, the size of the to-be-encoded data block corresponding to the ith TTI.

Table 1 shows the TBS table corresponding to the reference TTI. It should be understood that the size of the reference TTI may be, for example, 14 symbols.

**Table 1**

| $I_{TBS}$ | Bandwidth (Mbps) | 1 | 2 | 3 | 4 | 5 | 6 | 7 | 8 | 9 | ... |
|---|---|---|---|---|---|---|---|---|---|---|---|
| 1 | TBS (bit) | 16 | 32 | 56 | 88 | 120 | 152 | 176 | 208 | 224 | ... |

As shown in Table 1, $I_{TBS}$ indicates the TBS index. Assuming that bandwidth corresponding to the ith TTI is 9 Mbps, that the size of the to-be-encoded data block corresponding to the reference TTI is 224 bits can be obtained based on the TBS table corresponding to the reference TTI.

Optionally, assuming that the size of the to-be-encoded data block corresponding to the ith TTI is $N_{i\text{-}CBS}$, $N_{i\text{-}CBS}$ may be determined according to a formula (1):

$$N_{i\text{-}CBS} = floor\left(N_{j\text{-}CBS} \cdot N_{i\text{-}OS} / N_{j\text{-}OS}\right) \quad (1),$$

where

$N_{j\text{-}OS}$ is the size of the reference TTI, $N_{i\text{-}OS}$ is the size of the ith TTI, $N_{j\text{-}CBS}$ is the size of the to-be-encoded data block corresponding to the reference TTI, and $floor(\cdot)$ indicates rounding down.

For example, assuming that the size of the reference TTI is 14 symbols, a TBS corresponding to the reference TTI is 224 bits, and the size of the ith TTI is two symbols, the size of the to-be-encoded data block corresponding to the ith TTI may be floor(224*2/14).

In another optional embodiment, the data sending device may alternatively determine, based on the size of the ith TTI in the TTIs, the first frequency resource used to transmit the second data in the ith TTI, and a pre-stored first mapping relationship, the size of the to-be-encoded data block corresponding to the ith TTI, where the first mapping relationship includes a mapping relationship between a size of a TTI and a frequency resource and a size of a to-be-encoded data block, and i is an integer greater than 0.

For example, the data sending device may pre-store the TBS table shown in Table 2. The TBS table includes the mapping relationship between a size of a TTI and a frequency resource and a size of a to-be-encoded data block.

**Table 2**

| | | Bandwidth (Mbps) | 1 | 2 | 3 | 4 | 5 | 6 | 7 | 8 | 9 | ... |
|---|---|---|---|---|---|---|---|---|---|---|---|---|
| $I_{TBS}$ 1 | Two symbols | TBS (bit) | 2 | 4 | 8 | 16 | 18 | 22 | 26 | 30 | 32 | ... |
| | x symbols | Bandwidth | 1 | 2 | 3 | 4 | 5 | 6 | 7 | 8 | 9 | ... |
| | | TBS | x | x | x | x | x | x | x | x | x | ... |
| | ... | ... | ... | ... | ... | ... | ... | ... | ... | ... | ... | ... |

Assuming that the size of the $i^{th}$ TTI is two symbols, and the bandwidth corresponding to the $i^{th}$ TTI is 9 Mbps, it can be found from Table 2 that the size of the to-be-encoded data block corresponding to the $i^{th}$ TTI is 32 bits.

It should be understood that, in the uplink data transmission scenario, the data sending device in the data transmission method in this embodiment of this application may be a network device.

In an optional embodiment, after determining the time-frequency resources used to transmit the first data, the network device may send information used to indicate the time-frequency resources to a device that is to receive the first data; and/or after determining the transmission parameter used to transmit the second data, send the transmission parameter to a device that is to receive the first data, so that the device that is to receive the first data receives the first data based on the information indicating the time-frequency resources and/or the transmission parameter used to transmit the second data.

The following describes the data transmission method in this embodiment of this application in the uplink data transmission scenario. It should be understood that in the uplink data transmission scenario, the data sending device may be a terminal device.

In an optional embodiment, in S210, the data sending device may receive first indication information sent by a network device, where the first indication information is used to indicate the time-frequency resources.

Optionally, the first indication information may be statically configured or may be dynamically indicated. In an optional embodiment, the data sending device may receive a higher layer control message sent by the network device. The higher layer control message carries the first indication information. The higher layer control message may be, for example, a system message (system information, SI) or a radio resource control (radio resource control, RRC) message. This is not limited in this embodiment of this application. In another optional embodiment, the data sending device may receive an underlying control message sent by the network device. The underlying control message carries the first indication information. The underlying control message may be, for example, a downlink control message (downlink control information, DCI) or a control format indicator (control format indicator, CFI) message. This is not limited in this embodiment of this application.

Optionally, if the transmission parameter obtained by the data sending device includes only the quantity of transmission time intervals TTIs used to transmit the second data, and the size of each TTI, and does not include the first frequency resource used to transmit the second data in each TTI, the first indication information may further include frequency hopping information. The frequency hopping information is used to indicate a distribution status in terms of time of a frequency resource that is in the time-frequency resources and that is used to transmit the second data. The data sending device can determine, based on the frequency hopping information, the first frequency resource used to transmit the second data in each TTI.

Optionally, after receiving second indication information that is sent by the network device and that is used to instruct to enable the time-frequency resources to transmit the first data, the data sending device may enable the time-frequency resources, and multiplexes some or all of the time-frequency resources with a device that is to transmit the second data. Correspondingly, if the data sending device does not receive the second indication information, the data sending device may encode and map the first data based on a size of a to-be-encoded data block used to transmit

In an embodiment, in S220, the data sending device may receive the transmission parameter sent by the network device, where the transmission parameter includes at least one of the size of the to-be-encoded data block used to transmit the second data, the quantity of transmission time intervals TTIs used to transmit the second data, the size of each TTI, the first frequency resource used to transmit the second data in each TTI, the time-frequency resource occupied by the control channel in each TTI, and the time-frequency resource occupied by the pilot in each TTI.

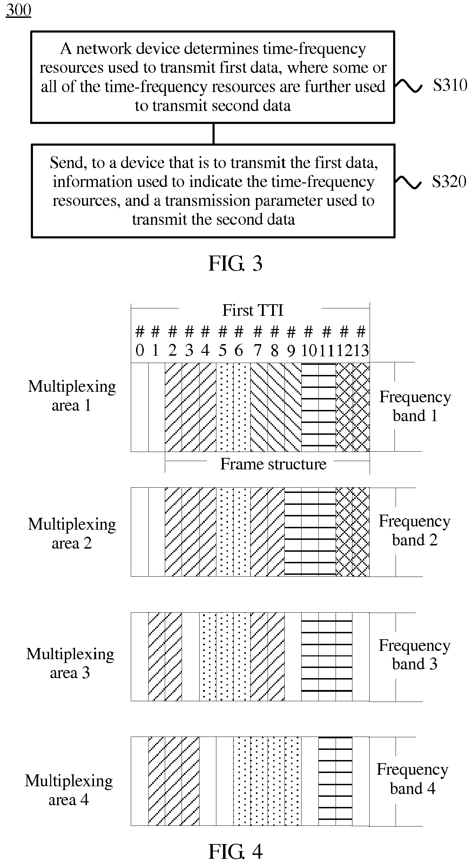

FIG. 3 is a schematic flowchart of an information transmission method 300 according to an embodiment of this application. The method 300 may be performed, for example, by a network device.

S310. A network device determines time-frequency resources used to transmit first data, where some or all of the time-frequency resources are further used to transmit second data.

S320. The network device sends, to a device that is to transmit the first data, information used to indicate the time-frequency resources, and a transmission parameter used to transmit the second data.

According to the data transmission method provided in this embodiment of this application, after determining the time-frequency resources and the transmission parameter used to transmit the second data, the network device may send, to a terminal device, the transmission parameter and/or the information used to indicate the time-frequency resources, so that the terminal device encodes and maps the first data based on the indication information and the transmission parameter.

Optionally, the transmission parameter includes at least one of a size of a to-be-encoded data block used to transmit the second data, a quantity of transmission time intervals TTIs used to transmit the second data, a size of each TTI, a first frequency resource used to transmit the second data in each TTI, a time-frequency resource occupied by a control channel in each TTI, and a time-frequency resource occupied by a pilot in each TTI.

Optionally, the network device may add, to different messages, the transmission parameter used to transmit the second data, and send, in a static configuration or dynamic indication manner, the transmission parameter to the device that is to transmit the first data. This is not limited in this embodiment of this application.

In an optional embodiment, this embodiment of this application provides a transmission parameter indication method. The transmission parameter may be jointly indicated by a first message and a second message. The first message is used to indicate a quantity of frequency bands that are used to transmit the second data and that are in a frequency domain resource used to transmit the first data, bandwidth of each frequency band, and a start position of each frequency band. The second message is used to indicate a frame structure that is used to transmit the second data in a frequency domain resource used to transmit the second data. The frame structure includes the quantity of TTIs used to transmit the second data, the size of each TTI, and a start position of each TTI.

For example, FIG. 4 is a schematic diagram of a multiplexed resource according to an embodiment of this application. The first message indicates that a frequency band 1, a frequency band 2, a frequency band 3, and a frequency band 4 in the frequency domain resource used to transmit the first data may be further used to transmit the second data. For example, the first message may carry the quantity of frequency bands, the bandwidth of each frequency band, and the start position of each frequency band. It should be understood that the start position of the frequency band may be indicated by using a start resource block subscript.

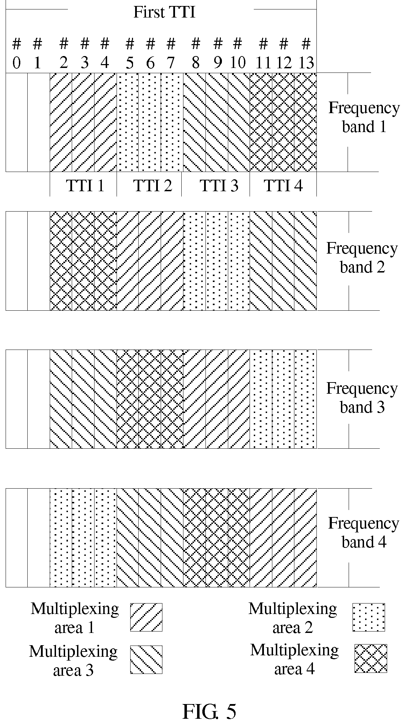

In addition, assuming that one frequency band in FIG. 4 is a multiplexing area, a multiplexing area 1 is used as an example, and the second message is used to indicate a frame structure used to transmit the second data in the frequency band 1. The second message may, for example, carry that the frequency band 1 includes five TTIs, a size of each TTI, and a start position of each TTI. As shown in FIG. 5, in the frequency band 1, a first TTI used to transmit the first data includes 14 symbols numbered 0 to 13. The first TTI includes five TTIs used to transmit the second data. The first of the five TTIs includes three symbols numbered 2, 3, and 4, the second includes two symbols numbered 5 and 6, the third includes three symbols numbered 7, 8, and 9, the fourth includes two symbols numbered 10 and 11, and the fifth includes two symbols numbered 12 and 13. Two symbols numbered 0 and 1 in the first TTI are used to transmit a pilot and/or a control channel of the first data. Similarly, frame structures in a multiplexing area 2, a multiplexing area 3, and a multiplexing area 4 may be learned. Details are not described herein.

Optionally, as shown in FIG. 4, a plurality of TTIs included in each frequency band may be continuous or discontinuous in time domain. For example, the five TTIs in the frequency band 1 and five TTIs in the frequency band 2 are continuous in time domain, four TTIs in the frequency band 3 are partially continuous in time domain, and three TTIs in the frequency band 4 are discontinuous in time domain. This is not limited in this embodiment of this application.

Optionally, the network device and the device that is to transmit the first data may agree on a plurality of frame structures in advance. In this case, the second message may indicate a frame structure index, and the device that is to transmit the first data may learn, based on the index, the frame structure that is used to transmit the second data in the frequency domain resource used to transmit the second data. This is not limited in this embodiment of this application.

In still another optional embodiment, this embodiment of this application provides another transmission parameter indication method. The transmission parameter may be jointly indicated by a first message and a second message. The first message is used to indicate the quantity of TTIs used to transmit the second data, the size of each TTI, a start position of each TTI, and the first frequency resource used to transmit the second data in each TTI.

For example, FIG. 5 is a schematic diagram of another multiplexed resource according to an embodiment of this application. The first message is used to indicate that a TTI 1, a TTI 2, a TTI 3, and a TTI 4 in a first TTI used to transmit the first data are further used to transmit the second data. The first message may carry, for example, the quantity of TTIs, the size of each TTI, the start position of each TTI, and the first frequency resource used to transmit the second data in each TTI. As shown in FIG. 5, the TTI 1, the TTI 2, the TTI 3, and the TTI 4 in the first TTI used to transmit the first data are further used to transmit the second data. The TTI 1 includes three symbols numbered 2, 3, and 4. The TTI 2 includes three symbols numbered 5, 6, and 7. The TTI 3 includes three symbols numbered 8, 9, and 10. The TTI 4 includes three symbols numbered 11, 12, and 13. The first message may carry bandwidth and a start position of a frequency band corresponding to each TTI.

Optionally, the second message may further carry frequency hopping information. The frequency hopping information is used to indicate a distribution status in terms of time of a frequency resource that is in the time-frequency resources and that is used to transmit the second data.

For example, one TTI in FIG. 5 corresponds to one multiplexing area. For example, in a multiplexing area 1, frequency hopping information of the TTI 1 is used to indicate that a first terminal device occupies a frequency band 1 in the TTI 1, a frequency band 2 in the TTI 2, a frequency band 3 in the TTI 3, and a frequency band 4 in the TTI 4. For example, in a multiplexing area 2, frequency hopping information of the TTI 2 is used to indicate that the first terminal device occupies the frequency band 4 in the TTI 1, the frequency band 1 in the TTI 2, the frequency band 2 in the TTI 3, and the frequency band 3 in the TTI 4. Similarly, time-frequency information distribution indicated by frequency hopping information of a multiplexing area 3 and that of a multiplexing area 4 may be learned. Details are not described herein.

Optionally, in the two transmission parameter indication methods in this embodiment of this application, the second message information may further carry the time-frequency resource occupied by the control channel in each TTI and/or the time-frequency resource occupied by the pilot in each TTI. Correspondingly, the device that is configured to transmit the first data may learn, based on the second message, the time-frequency resource occupied by the control channel in each TTI and/or the time-frequency resource occupied by the pilot in each TTI.

Optionally, a pilot may be located in a first symbol or a non-first symbol in a TTI, and bandwidth occupied by the pilot may be all or some of bandwidth corresponding to the symbol in which the pilot is located. This is not limited in this embodiment of this application.

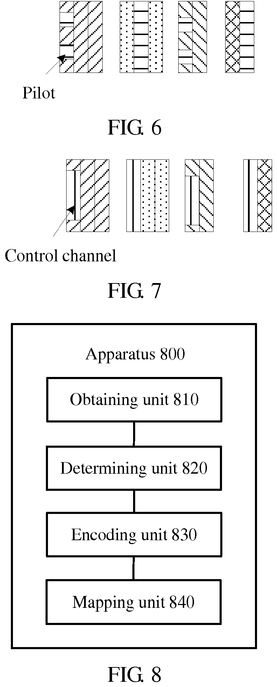

For example, FIG. 6 is a schematic structural diagram of a pilot location according to an embodiment of this application (a part shown in a gray shadow in FIG. 6 is a pilot). A first TTI and a second TTI in FIG. 6 each include three symbols. A pilot in the first TTI is located on a first symbol, and a pilot in the second TTI is located on a second symbol. In addition, bandwidth occupied by the pilot in the first TTI is some bandwidth corresponding to the symbol in which the pilot is located, and bandwidth occupied by the pilot in the second TTI is all bandwidth corresponding to the symbol in which the pilot is located. Similarly, time-frequency resources occupied by a pilot in a third TTI and that in a fourth TTI may be learned. Details are not described herein.

Optionally, a control channel may be located in a first symbol of a TTI, and bandwidth occupied by the control channel may be all or some of bandwidth corresponding to the symbol in which the control channel is located. This is not limited in this embodiment of this application.

For example, FIG. 7 is a schematic structural diagram of a control channel location according to an embodiment of this application (a part shown in a gray shadow in FIG. 7 is a control channel). A first TTI and a second TTI in FIG. 7 each include three symbols. A control channel in the first TTI is located on a first symbol, and a control channel in the second TTI is located on a second symbol. In addition, bandwidth occupied by the control channel in the first TTI is some bandwidth corresponding to the symbol in which the pilot is located, and bandwidth occupied by the control channel in the second TTI is all bandwidth corresponding to the symbol in which the pilot is located. Similarly, time-frequency resources occupied by a control channel in a third TTI and that in a fourth TTI may be learned. Details are not described herein.

Optionally, because a period of an indication of the first message is long and information indicated by the first message changes slowly, and the first message can be statically configured, the first message may be a higher layer control message. The higher layer control message may be, for example, SI or an RRC message. This is not limited in this embodiment of this application.

Optionally, because a period of an indication of the second message is short and information indicated by the second message changes quickly, and the information needs to be dynamically indicated, the second message may be an underlying control message. The underlying control message may be, for example, DCI or a CFI message. This is not limited in this embodiment

According to the data transmission method in this embodiment of this application, the second message information carries the time-frequency resource occupied by the control channel in each TTI and/or the time-frequency resource occupied by the pilot in each TTI, so that symbols occupied by a pilot and/or a control channel of the second data can be avoided when the first data is transmitted. This avoids affecting normal transmission of the second data.

An embodiment of this application further provides another data transmission method. The method is used by a data receiving end to receive data. The data receiving end may be a terminal device, or may be a network device. This is not limited in this embodiment of this application.

In an optional embodiment, the data receiving device may obtain time-frequency resources used to transmit first data, where some or all of the time-frequency resources are further used to transmit second data; obtain a transmission parameter used to transmit the second data; determine, based on the transmission parameter, a size of a to-be-decoded data block used to decode the first data; and receive, based on the size of the to-be-decoded data block, a to-be-decoded data block of the first data by using the time-frequency resources.

It should be understood that the to-be-decoded data block received by the data receiving device may be understood as a data block obtained after a data sending device encodes a to-be-encoded data block.

The transmission parameter may include at least one of a size of a to-be-encoded data block used to transmit the second data, a quantity of TTIs used to transmit the second data, a size of each TTI, a first frequency resource used to transmit the second data in each TTI, a time-frequency resource occupied by a control channel in each TTI, and a time-frequency resource occupied by a pilot in each TTI. This is not limited in this embodiment of this application.

In an optional embodiment, the transmission parameter may include the size of the to-be-encoded data block used to transmit the second data. The data receiving device may determine, based on the size of the to-be-encoded data block used to transmit the second data, the size of the to-be-decoded data block used to decode the first data; receive, based on the size of the to-be-decoded data block, the to-be-decoded data block of the first data by using the time-frequency resources; and decode the received to-be-decoded data block.

In another optional embodiment, the transmission parameter may include the quantity of TTIs used to transmit the second data, the size of each TTI and the first frequency resource used to transmit the second data in each TTI. The data receiving device may determine, based on the size of each TTI and the first frequency resource used to transmit the second data in each TTI, a size of a to-be-encoded data block corresponding to each TTI, and use the size of the to-be-encoded data block corresponding to each TTI as the size of the to-be-decoded data block used to decode the first data.

According to the data transmission methods in the embodiments of this application, the data sending device determines the size of the to-be-encoded data block of the eMBB data based on the transmission status of the URLLC data, and encodes and maps the eMBB data based on the size of the to-be-encoded data block of the eMBB data. In this case, on the multiplexed part of the physical resource, the size of the to-be-encoded data block of the eMBB data can better match the size of the to-be-encoded data block of the URLLC data. Therefore, when the data receiving device decodes the eMMB data, interference of the URLLC data in the eMBB data is limited to a relatively small data range. This reduces the interference of the URLLC data in the eMBB data.

In addition, when decoding a code block of the URLLC data, a code block of the eMBB data that interferes with the code block needs to be read. Because on the multiplexed part of the physical resource, the size of the to-be-encoded data block of the eMBB data can better match the size of the to-be-encoded data block of the URLLC data, a size of the code block of the eMBB data can also better match a size of the code block of the URLLC data. This reduces a decoding delay generated when the code block of the URLLC data is being decoded.

The foregoing describes in detail the data transmission methods according to the embodiments of this application with reference to FIG. 1 to FIG. 7. The following describes in detail data transmission apparatuses according to the embodiments of this application with reference to FIG. 8 to FIG. 11.

FIG. 8 shows a data transmission apparatus 800 according to an embodiment of this application. The apparatus 800 includes:

an obtaining unit 810, configured to: obtain time-frequency resources used to transmit first data, where some or all of the time-frequency resources are further used to transmit second data; and obtain a transmission parameter used to transmit the second data;

a determining unit 820, configured to determine, based on the transmission parameter obtained by the obtaining unit, a size of a to-be-encoded data block used to encode the first data;

an encoding unit 830, configured to encode the first data based on the size of the to-be-encoded data block determined by the determining unit; and

a mapping unit 840, configured to map a data block obtained by the encoding unit through the encoding to the time-frequency resources.

The transmission parameter includes at least one of a size of a to-be-encoded data block used to transmit the second data, a quantity of transmission time intervals TTIs used to transmit the second data, a size of each TTI, a first frequency resource used to transmit the second data in each TTI, a time-frequency resource occupied by a control channel in each TTI, and a time-frequency resource occupied by a pilot in each TTI.

The determining unit is specifically configured to: determine, based on the size of each TTI and the first frequency resource used to transmit the second data in each TTI, a size of a to-be-encoded data block corresponding to each TTI; and determine, based on the size of the to-be-encoded data block corresponding to each TTI, the size of the to-be-encoded data block used to encode the first data.

Optionally, the determining unit is further configured to: before the determining, based on the size of the to-be-encoded data block corresponding to each TTI, the size of the to-be-encoded data block used to encode the first data, determine, based on the first frequency resource used to transmit the second data in each TTI, a second frequency resource that is in the time-frequency resources and that is not used to transmit the second data; and determine, based on the second frequency resource and TTIs corresponding to the time-frequency resources, a size of a to-be-encoded data block used to encode data that is in the first data and that is transmitted by using the second frequency resource. Correspondingly, the determining unit is specifically configured to determine, based on the size of the to-be-encoded data block corresponding to each TTI and the size of the to-be-encoded data block used to encode the data that is in the first data and that is transmitted by using the second frequency resource, the size of the to-be-encoded data block used to encode the first data.

Optionally, the determining unit is specifically configured to: determine, based on a first frequency resource used to transmit the second data in an $i^{th}$ TTI in the TTIs, a size of a to-be-encoded data block corresponding to a reference TTI when the $i^{th}$ TTI corresponds to a size of the reference TTI, where i is an integer greater than 0; and determine, based on the size of the to-be-encoded data block corresponding to the reference TTI and a size of the $i^{th}$ TTI, a size of a to-be-encoded data block corresponding to the $i^{th}$ TTI.

Optionally, the size of the to-be-encoded data block corresponding to the $i^{th}$ TTI is $N_{i\text{-}CBS}$, and the determining unit is specifically configured to determine $N_{i\text{-}CBS}$ according to the following formula:

$$N_{i\text{-}CBS} = floor\left(N_{j\text{-}CBS} \cdot N_{i\text{-}OS} / N_{j\text{-}OS}\right),$$

where

$N_{j\text{-}OS}$ is the size of the reference TTI, $N_{i\text{-}OS}$ is the size of the $i^{th}$ TTI, $N_{j\text{-}CBS}$ is the size of the to-be-encoded data block corresponding to the reference TTI, and *floor*(·) indicates rounding down.

Optionally, the determining unit is specifically configured to determine, based on a size of an $i^{th}$ TTI in the TTIs, a first frequency resource used to transmit the second data in the $i^{th}$ TTI, and a pre-stored first mapping relationship, a size of a to-be-encoded data block corresponding to the $i^{th}$ TTI, where the first mapping relationship includes a mapping relationship between a size of a TTI and a frequency resource and a size of a to-be-encoded data block, and i is an integer greater than 0.

In the foregoing embodiment, the data transmission apparatus 800 may be the network device 110, the terminal device 120, or the terminal device 130.

Optionally, the obtaining unit is specifically configured to receive first indication information sent by a network device. The first indication information is used to indicate the time-frequency resources. In this embodiment, the data transmission apparatus 800 is specifically the terminal device 120 or the terminal device 130.

Optionally, the first indication information includes frequency hopping information. The frequency hopping information is used to indicate a distribution status in terms of time of a frequency resource that is in the time-frequency resources and that is used to transmit the second data. In this embodiment, the data transmission apparatus 800 is specifically the terminal device 120 or the terminal device 130.

Optionally, the obtaining unit is specifically configured to receive the transmission parameter sent by the network device. In this embodiment, the data transmission apparatus 800 is specifically the terminal device 120 or the terminal device 130.

Optionally, the obtaining unit is further configured to receive second indication information sent by the network device. The second indication information is used to instruct to enable the time-frequency resources to transmit the first data. In this embodiment, the data transmission apparatus 800 is specifically the terminal device 120 or the terminal device 130.

Optionally, the apparatus further includes a sending unit. The sending unit is configured to send, to a device that is to receive the first data, information used to indicate the time-frequency resources; and/or send the transmission parameter to the device that is to receive the first data. In this embodiment, the data transmission apparatus 800 is specifically the network device 110.

In an optional example, a person skilled in the art may understand that the apparatus 800 may be specifically the data sending device in the foregoing method embodiment. The apparatus 800 may be configured to perform procedures and/or steps corresponding to the data sending device in the foregoing method embodiment. To avoid repetition, details are not described herein again.

It should be understood that the apparatus 800 herein may be presented in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or another proper component that supports a described function.

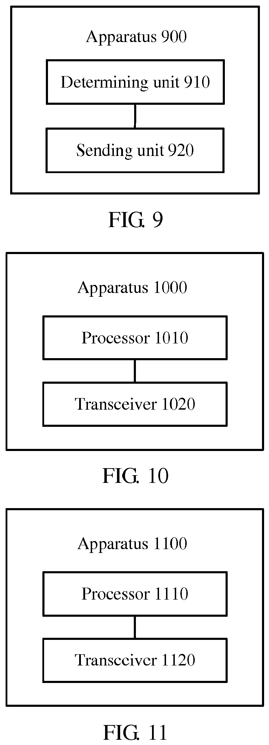

FIG. 9 shows an information transmission apparatus 900 according to an embodiment of this application. The apparatus 900 includes:

a determining unit 910, configured to determine time-frequency resources used to transmit first data, where some or all of the time-frequency resources are further used to transmit second data; and

a sending unit 920, configured to send, to a device that is to transmit the first data, information that is used to indicate the time-frequency resources and that is determined by the determining unit, and a transmission parameter used to transmit the second data.

The transmission parameter includes at least one of a size of a to-be-encoded data block used to transmit the second data, a quantity of transmission time intervals TTIs used to transmit the second data, a size of each TTI, a first frequency resource used to transmit the second data in each TTI, a time-frequency resource occupied by a control channel in each TTI, and a time-frequency resource occupied by a pilot in each TTI.

In an optional example, a person skilled in the art may understand that the apparatus 900 may be specifically the network device in the foregoing method embodiment. The apparatus 900 may be configured to perform procedures and/or steps corresponding to the network device in the foregoing method embodiment. To avoid repetition, details are not described herein again.

It should be understood that the apparatus 900 herein may be presented in a form of a functional unit. The term "unit" herein may indicate an application-specific integrated circuit (ASIC), an electronic circuit, a processor (for example, a shared processor, a dedicated processor, or a group processor) configured to execute one or more software or firmware programs and a memory, a combined logic circuit, and/or another proper component that supports a described function.

FIG. 10 is a schematic block diagram of a data transmission apparatus 1000 according to an embodiment of this application. As shown in FIG. 10, the apparatus 1000 includes a processor 1010 and a transceiver 1020.

The processor 1010 is configured to: obtain time-frequency resources used to transmit first data, where some or all of the time-frequency resources are further used to transmit second data; obtain a transmission parameter used to transmit the second data; determine, based on the transmission parameter, a size of a to-be-encoded data block used to encode the first data; and encode the first data based on the size of the to-be-encoded data block.

The transceiver 1020 is configured to map a data block obtained by the encoding unit through the encoding to the time-frequency resources.

Optionally, the apparatus 1000 may further include a memory. The memory may include a read-only memory and a random access memory, and provide an instruction and data for the processor. A part of the memory may further include a non-volatile random access memory. For example, the memory may further store information of a device type. The processor 1010 may be configured to execute the instruction stored in the memory, and when the processor executes the instruction, the processor may perform steps corresponding to the terminal device in the foregoing method embodiment.

It should be understood that in this embodiment of this application, the processor may be a central processing unit (central processing unit, CPU), the processor may alternatively be another general purpose processor, a digital signal processor (digital signal processor, DSP), an application-specific integrated circuit ASIC, a field programmable gate array (field programmable gate array, FPGA) or another programmable logic device, a discrete gate or a transistor logic device, a discrete hardware component, or the like. The general purpose processor may be a microprocessor, or the processor may be any conventional processor or the like.

FIG. 11 is a schematic block diagram of an information transmission apparatus 1100 according to an embodiment of this application. As shown in FIG. 11, the apparatus 1100 includes a processor 1110 and a transceiver 1120.

The processor 1110 is configured to determine time-frequency resources used to transmit first data, where some or all of the time-frequency resources are further used to transmit second data.

The transceiver 1120 is configured to send, to a device that is to transmit the first data, information that is used to indicate the time-frequency resources and that is determined by the determining unit, and a transmission parameter used to transmit the second data.

Optionally, the apparatus 1100 may further include a memory. The memory may include a read-only memory and a random access memory, and provide an instruction and data for the processor. A part of the memory may further include a non-volatile random access memory. For example, the memory may further store information of a device type. The processor 1110 may be configured to execute the instruction stored in the memory, and when the processor executes the instruction, the processor may perform steps corresponding to the network device in the foregoing method embodiment.

It should be understood that in this embodiment of this application, the processor may be a central processing unit (CPU), or the processor may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

In an implementation process, steps in the foregoing methods can be implemented by using a hardware integrated logical circuit in the processor, or by using instructions in a form of software. The steps of the method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, a register, or the like. The storage medium is located in the memory, and the processor executes instructions in the memory and completes the steps in the foregoing methods in combination with hardware of the processor. To avoid repetition, details are not described herein again.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not constitute any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, reference may be made to corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer readable storage medium or may be transmitted from one computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, microwave, or the like) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD), a semiconductor medium (for example, a solid-state drive (solid state disk, SSD)), or the like.

**Claims**

1. A data transmission method (200), comprising:

obtaining (S210) time-frequency resources used to transmit first data, wherein some or all of the time-frequency resources are further used to transmit second data;
obtaining (S220) a transmission parameter used to transmit the second data;
determining (S230), based on the transmission parameter, a size of a to-be-encoded data block used to encode the first data;
encoding (S240) the first data based on the size of the to-be-encoded data block; and
mapping (S250) a data block obtained through the encoding to the time-frequency resources;
wherein the transmission parameter comprises at least one of a size of a to-be-encoded data block used to transmit the second data, a quantity of transmission time intervals TTIs used to transmit the second data, a size of each TTI, a first frequency resource used to transmit the second data in each TTI, a time-frequency resource occupied by a control channel in each TTI, and a time-frequency resource occupied by a pilot in each TTI; and
wherein the determining (S230), based on the transmission parameter, a size of a to-be-encoded data block used to encode the first data comprises:

determining, based on the size of each TTI and the first frequency resource used to transmit the second data in each TTI, a size of a to-be-encoded data block corresponding to each TTI; and

determining, based on the size of the to-be-encoded data block corresponding to each TTI, the size of the to-be-encoded data block used to encode the first data.

2. The method (200) according to claim 1, wherein before the determining, based on the size of the to-be-encoded data block corresponding to each TTI, the size of the to-be-encoded data block used to encode the first data, the method further comprises:

determining, based on the first frequency resource used to transmit the second data in each TTI, a second frequency resource that is in the time-frequency resources and that is not used to transmit the second data; and
determining, based on the second frequency resource and TTIs corresponding to the time-frequency resources, a size of a to-be-encoded data block used to encode data that is in the first data and that is transmitted by using the second frequency resource; and
correspondingly, the determining, based on the size of the to-be-encoded data block corresponding to each TTI, the size of the to-be-encoded data block used to encode the first data comprises:
determining, based on the size of the to-be-encoded data block corresponding to each TTI and the size of the to-be-encoded data block used to encode the data that is in the first data and that is transmitted by using the second frequency resource, the size of the to-be-encoded data block used to encode the first data.

3. The method (200) according to claim 1 or 2, wherein the determining, based on the size of each TTI and the first frequency resource used to transmit the second data in each TTI, a size of a to-be-encoded data block corresponding to each TTI comprises:

determining, based on a first frequency resource used to transmit the second data in an $i^{th}$ TTI in the TTIs, a size of a to-be-encoded data block corresponding to a reference TTI when the $i^{th}$ TTI corresponds to a size of the reference TTI, wherein i is an integer greater than 0; and
determining, based on the size of the to-be-encoded data block corresponding to the reference TTI and a size of the $i^{th}$ TTI, a size of a to-be-encoded data block corresponding to the $i^{th}$ TTI.

4. An information transmission method (300), comprising:

determining (S310), by a network device, time-frequency resources used to transmit first data, wherein some or all of the time-frequency resources are further used to transmit second data;
sending (S320), to a device that is to transmit the first data, information used to indicate the time-frequency resources, and a transmission parameter used to transmit the second data; and
performing, by the device that is to transmit the first data, the data transmission method according to any of claims 1 to 3.

5. The method (300) according to claim 4, wherein the transmission parameter comprises:
at least one of a size of a to-be-encoded data block used to transmit the second data, a quantity of transmission time intervals TTIs used to transmit the second data, a size of each TTI, a first frequency resource used to transmit the second data in each TTI, a time-frequency resource occupied by a control channel in each TTI, and a time-frequency resource occupied by a pilot in each TTI.

6. A data transmission apparatus (800), comprising:

an obtaining unit (810), configured to: obtain time-frequency resources used to transmit first data, wherein some or all of the time-frequency resources are further used to transmit second data; and obtain a transmission parameter used to transmit the second data;
a determining unit (820), configured to determine, based on the transmission parameter obtained by the obtaining unit (810), a size of a to-be-encoded data block used to encode the first data;
an encoding unit (830), configured to encode the first data based on the size of the to-be-encoded data block determined by the determining unit (820); and
a mapping unit (840), configured to map a data block obtained by the encoding unit (830) through the encoding to the time-frequency resources;
wherein the transmission parameter comprises at least one of a size of a to-be-encoded data block used to transmit the second data, a quantity of transmission time intervals TTIs used to transmit the second data, a size of each TTI, a first frequency resource used to transmit the second data in each TTI, a time-frequency resource occupied by a control channel in each TTI, and a time-frequency resource occupied by a pilot in each TTI; and

wherein the determining unit (820) is specifically configured to:

determine, based on the size of each TTI and the first frequency resource used to transmit the second data in each TTI, a size of a to-be-encoded data block corresponding to each TTI; and
determine, based on the size of the to-be-encoded data block corresponding to each TTI, the size of the to-be-encoded data block used to encode the first data.

7.  The apparatus (800) according to claim 6, wherein the determining unit (820) is further configured to:

before the determining, based on the size of the to-be-encoded data block corresponding to each TTI, the size of the to-be-encoded data block used to encode the first data, determine, based on the first frequency resource used to transmit the second data in each TTI, a second frequency resource that is in the time-frequency resources and that is not used to transmit the second data; and
determine, based on the second frequency resource and TTIs corresponding to the time-frequency resources, a size of a to-be-encoded data block used to encode data that is in the first data and that is transmitted by using the second frequency resource; and
correspondingly, the determining unit is specifically configured to determine, based on the size of the to-be-encoded data block corresponding to each TTI and the size of the to-be-encoded data block used to encode the data that is in the first data and that is transmitted by using the second frequency resource, the size of the to-be-encoded data block used to encode the first data.

8.  A system comprising a data transmission apparatus (800) according to claim 6 or 7 and an information transmission apparatus (900), the information transmission apparatus (900) comprising:

a determining unit (910), configured to determine time-frequency resources used to transmit first data, wherein some or all of the time-frequency resources are further used to transmit second data; and
a sending unit (920), configured to send, to the data transmission apparatus (800), information that is used to indicate the time-frequency resources and that is determined by the determining unit (910), and a transmission parameter used to transmit the second data.

9.  A computer readable storage medium, configured to store a computer program, wherein the computer program comprises instructions used to perform the method (200, 300) according to any one of claims 1 to 5.

10. A computer program product comprising instructions, wherein when the computer program product runs on a computer, the computer is enabled to perform the method (200, 300) according to any one of claims 1 to 5.

**Patentansprüche**

1.  Datenübertragungsverfahren (200), umfassend:

Erhalten (S210) von Zeitfrequenzressourcen, die verwendet werden, um erste Daten zu übertragen, wobei einige oder alle der Zeitfrequenzressourcen ferner verwendet werden, um zweite Daten zu übertragen;
Erhalten (S220) eines Übertragungsparameters, der verwendet wird, um die zweiten Daten zu übertragen;
Bestimmen (S230), basierend auf dem Übertragungsparameter, einer Größe eines zu codierenden Datenblocks, der verwendet wird, um die ersten Daten zu codieren;
Codieren (S240) der ersten Daten basierend auf der Größe des zu codierenden Datenblocks; und
Zuordnen (S250) eines Datenblocks, der durch das Codieren erhalten wird, zu den Zeitfrequenzressourcen;
wobei der Übertragungsparameter mindestens eines von einer Größe eines zu codierenden Datenblocks, der verwendet wird, um die zweiten Daten zu übertragen, einer Menge von Übertragungszeitintervallen (transmission time intervals - TTIs), die verwendet werden, um die zweiten Daten zu übertragen, einer Größe jedes TTI, einer ersten Frequenzressource, die verwendet wird, um die zweiten Daten in jedem TTI zu übertragen, einer Zeitfrequenzressource, die durch einen Steuerkanal in jedem TTI belegt wird, und einer Zeitfrequenzressource, die durch einen Piloten in jedem TTI belegt wird, umfasst; und
wobei das Bestimmen (S230), basierend auf dem Übertragungsparameter, einer Größe eines zu codierenden Datenblocks, der verwendet wird, um die ersten Daten zu codieren, umfasst:

Bestimmen, basierend auf der Größe jedes TTI und der ersten Frequenzressource, die verwendet wird, um die zweiten Daten in jedem TTI zu übertragen, einer Größe eines zu codierenden Datenblocks, der jedem TTI entspricht; und
Bestimmen, basierend auf der Größe des zu codierenden Datenblock, der einem TTI entspricht, der Größe des zu codierenden Datenblocks, der verwendet wird, um die ersten Daten zu codieren.

**2.** Verfahren (200) nach Anspruch 1, wobei vor dem Bestimmen, basierend auf der Größe des zu codierenden Datenblocks, der jedem TTI entspricht, der Größe des zu codierenden Datenblocks, der verwendet wird, um die ersten Daten zu codieren, das Verfahren ferner umfasst:

Bestimmen, basierend auf der ersten Frequenzressource, die verwendet wird, um die zweiten Daten in jedem TTI zu übertragen, einer zweiten Frequenzressource, die sich in der Zeitfrequenzressource befindet und die nicht verwendet wird, um die zweiten Daten zu übertragen; und
Bestimmen, basierend auf der zweiten Frequenzressource und den TTIs, die den Zeitfrequenzressourcen entsprechen, einer Größe eines zu codierenden Datenblocks, der verwendet wird, um Daten zu codieren, die sich in den ersten Daten befinden und die durch Verwenden der zweiten Frequenzressource übertragen werden; und
dementsprechend das Bestimmen, basierend auf der Größe des zu codierenden Datenblocks, der jedem TTI entspricht, der Größe des zu codierenden Datenblocks, der verwendet wird, um die ersten Daten zu codieren, umfasst:
Bestimmen, basierend auf der Größe des zu codierenden Datenblocks, der jedem TTI entspricht, und der Größe des zu codierenden Datenblocks, der verwendet wird, um die Daten zu codieren, die sich in den ersten Daten befinden und die durch Verwenden der zweiten Frequenzressource übertragen werden, der Größe des zu codierenden Datenblocks, der verwendet wird, um die ersten Daten zu codieren.

**3.** Verfahren (200) nach Anspruch 1 oder 2, wobei das Bestimmen, basierend auf der Größe jedes TTI und der ersten Frequenzressource, die verwendet wird, um die zweiten Daten in jedem TTI zu übertragen, einer Größe eines zu codierenden Datenblocks, der jedem TTI entspricht, umfasst:

Bestimmen, basierend auf einer ersten Frequenzressource, die verwendet wird, um die zweiten Daten in einem $i$-ten TTI in den TTIs zu übertragen, einer Größe eines zu codierenden Datenblocks, der einem Referenz-TTI entspricht, wenn das $i$-te TTI einer Größe des Referenz-TTI entspricht, wobei $i$ eine ganze Zahl über 0 ist; und
Bestimmen, basierend auf der Größe des zu codierenden Datenblocks, der dem Referenz-TTI und einer Größe des $i$-ten TTI entspricht, einer Größe eines zu codierenden Datenblocks, der dem $i$-ten TTI entspricht.

**4.** Informationenübertragungsverfahren (300), umfassend:

Bestimmen (S310), durch eine Netzwerkvorrichtung, von Zeitfrequenzressourcen, die verwendet werden, um erste Daten zu übertragen, wobei einige oder alle der Zeitfrequenzressourcen ferner verwendet werden, um zweite Daten zu übertragen;
Senden (S320), an eine Vorrichtung, die die ersten Daten übertragen soll, von Informationen, die verwendet werden, um die Zeitfrequenzressourcen anzuzeigen, und eines Übertragungsparameters, der verwendet wird, um die zweiten Daten zu übertragen; und
Durchführen, durch die Vorrichtung, die die ersten Daten übertragen soll, des Datenübertragungsverfahrens nach einem der Ansprüche 1 bis 3.

**5.** Verfahren (300) nach Anspruch 4, wobei der Übertragungsparameter umfasst:
mindestens eines von einer Größe eines zu codierenden Datenblocks, der verwendet wird, um die zweiten Daten zu übertragen, einer Menge von Übertragungszeitintervallen (TTIs), die verwendet werden, um die zweiten Daten zu übertragen, einer Größe jedes TTI, einer ersten Frequenzressource, die verwendet wird, um die zweiten Daten in jedem TTI zu übertragen, einer Zeitfrequenzressource, die durch einen Steuerkanal in jedem TTI belegt wird, und einer Zeitfrequenzressource, die durch einen Piloten in jedem TTI belegt wird.

**6.** Datenübertragungseinrichtung (800), umfassend:

eine Erhaltungseinheit (810), die konfiguriert ist, um: Zeitfrequenzressourcen zu erhalten, die verwendet werden, um erste Daten zu übertragen, wobei einige oder alle der Zeitfrequenzressourcen ferner verwendet werden, um zweite Daten zu übertragen; und einen Übertragungsparameter zu erhalten, der verwendet wird, um die zweiten Daten zu übertragen;
eine Bestimmungseinheit (820), die konfiguriert ist, um basierend auf dem Übertragungsparameter, der durch die Erhaltungseinheit (810) erhalten wird, eine Größe eines zu codierenden Datenblocks zu bestimmen, der verwendet wird, um die ersten Daten zu codieren;

eine Codierungseinheit (830), die konfiguriert ist, um die ersten Daten basierend auf der Größe des zu codierenden Datenblocks, der durch die Bestimmungseinheit (820) bestimmt wird, zu codieren; und

eine Zuordnungseinheit (840), die konfiguriert ist, um einen Datenblock, der durch die Codierungseinheit (830) durch das Codieren erhalten wird, zu den Zeitfrequenzressourcen zuzuordnen;

wobei der Übertragungsparameter mindestens eines von einer Größe eines zu codierenden Datenblocks, der verwendet wird, um die zweiten Daten zu übertragen, einer Menge von Übertragungszeitintervallen (TTIs), die verwendet werden, um die zweiten Daten zu übertragen, einer Größe jedes TTI, einer ersten Frequenzressource, die verwendet wird, um die zweiten Daten in jedem TTI zu übertragen, einer Zeitfrequenzressource, die durch einen Steuerkanal in jedem TTI belegt wird, und einer Zeitfrequenzressource, die durch einen Piloten in jedem TTI belegt wird, umfasst; und

wobei die Bestimmungseinheit (820) speziell konfiguriert ist, um:

basierend auf der Größe jedes TTI und der ersten Frequenzressource, die verwendet wird, um die zweiten Daten in jedem TTI zu übertragen, eine Größe eines zu codierenden Datenblocks, der jedem TTI entspricht, zu bestimmen; und

basierend auf der Größe des zu codierenden Datenblocks, der jedem TTI entspricht, die Größe des zu codierenden Datenblocks, der verwendet wird, um die ersten Daten zu codieren, zu bestimmen.

7. Einrichtung (800) nach Anspruch 6, wobei die Bestimmungseinheit (820) ferner konfiguriert ist, um:

vor dem Bestimmen, basierend auf der Größe des zu codierenden Datenblocks, der jedem TTI entspricht, der Größe des zu codierenden Datenblocks, der verwendet wird, um die ersten Daten zu codieren, basierend auf der ersten Frequenzressource, die verwendet wird, um die zweiten Daten in jedem TTI zu übertragen, eine zweite Frequenzressource zu bestimmen, die sich in den Zeitfrequenzressourcen befindet und die nicht verwendet wird, um die zweiten Daten zu übertragen; und

basierend auf der zweiten Frequenzressource und den TTIs, die den Zeitfrequenzressourcen entsprechen, eine Größe eines zu codierenden Datenblocks zu bestimmen, der verwendet wird, um Daten zu codieren, die sich in den ersten Daten befinden und die durch Verwenden der zweiten Frequenzressource übertragen werden; und

wobei dementsprechend, die Bestimmungseinheit speziell konfiguriert ist, um basierend auf der Größe des zu codierenden Datenblocks, der jedem TTI entspricht, und der Größe des zu codierenden Datenblocks, der verwendet wird, um die Daten, die sich in den ersten Daten befinden und die durch Verwenden der zweiten Frequenzressource übertragen werden, die Größe des zu codierenden Datenblocks, der verwendet wird, um die ersten Daten zu codieren, zu bestimmen.

8. System, umfassend eine Datenübertragungseinrichtung (800) nach Anspruch 6 oder 7 und eine Informationenübertragungseinrichtung (900), die Informationenübertragungseinrichtung (900) umfassend:

eine Bestimmungseinheit (910), die konfiguriert ist, um Zeitfrequenzressourcen zu bestimmen, die verwendet werden, um erste Daten zu übertragen, wobei einige oder alle der Zeitfrequenzressourcen ferner verwendet werden, um zweite Daten zu übertragen; und

eine Sendeeinheit (920), die konfiguriert ist, um Informationen, die verwendet werden, um die Zeitfrequenzressourcen anzuzeigen und die durch die Bestimmungseinheit (910) bestimmt werden, und einen Übertragungsparameter, der verwendet wird, um die zweiten Daten zu übertragen, an die Datenübertragungseinrichtung (800) zu senden.

9. Computerlesbares Speichermedium, das konfiguriert ist, um ein Computerprogramm zu speichern, wobei das Computerprogramm Anweisungen umfasst, die verwendet werden, um das Verfahren (200, 300) nach einem der Ansprüche 1 bis 5 durchzuführen.

10. Computerprogrammprodukt, umfassend Anweisungen, wobei, wenn das Computerprogrammprodukt auf einem Computer ausgeführt wird, der Computer aktiviert ist, um das Verfahren (200, 300) nach einem der Ansprüche 1 bis 5 durchzuführen.

**Revendications**

1. Procédé de transmission de données (200), comprenant :

   l'obtention (S210) de ressources temps-fréquence utilisées pour transmettre des premières données, certaines ou toutes les ressources temps-fréquence étant en outre utilisées pour transmettre des secondes données ;
   l'obtention (S220) d'un paramètre de transmission utilisé pour transmettre les secondes données ;
   la détermination (S230), sur la base du paramètre de transmission, d'une taille d'un bloc de données à coder utilisé pour coder les premières données ;
   le codage (S240) des premières données sur la base de la taille du bloc de données à coder ; et
   le mappage (S250) d'un bloc de données obtenu par le biais du codage aux ressources temps-fréquence ;
   dans lequel le paramètre de transmission comprend une taille d'un bloc de données à coder utilisé pour transmettre les secondes données et/ou une quantité d'intervalles de temps de transmission TTI utilisés pour transmettre les secondes données et/ou une taille de chaque TTI et/ou une première ressource de fréquence utilisée pour transmettre les secondes données dans chaque TTI et/ou une ressource temps-fréquence occupée par un canal de commande dans chaque TTI et/ou une ressource temps-fréquence occupée par un pilote dans chaque TTI ; et
   dans lequel la détermination (S230), sur la base du paramètre de transmission, d'une taille d'un bloc de données à coder utilisé pour coder les premières données comprend :

      la détermination, sur la base de la taille de chaque TTI et de la première ressource de fréquence utilisée pour transmettre les secondes données dans chaque TTI, d'une taille d'un bloc de données à coder correspondant à chaque TTI ; et
      la détermination, sur la base de la taille du bloc de données à coder correspondant à chaque TTI, de la taille du bloc de données à coder utilisé pour coder les premières données.

2. Procédé (200) selon la revendication 1, dans lequel avant la détermination, en fonction de la taille du bloc de données à coder correspondant à chaque TTI, de la taille du bloc de données à coder utilisé pour coder les premières données, le procédé comprend en outre :

   la détermination, sur la base de la première ressource de fréquence utilisée pour transmettre les secondes données dans chaque TTI, d'une seconde ressource de fréquence qui se trouve dans les ressources temps-fréquence et qui n'est pas utilisée pour transmettre les secondes données ; et
   la détermination, sur la base de la seconde ressource de fréquence et des TTI correspondant aux ressources temps-fréquence, d'une taille d'un bloc de données à coder utilisé pour coder des données qui sont dans les premières données et qui sont transmises à l'aide de la seconde ressource de fréquence ; et
   respectivement, la détermination, en fonction de la taille du bloc de données à coder correspondant à chaque TTI, de la taille du bloc de données à coder utilisé pour coder les premières données comprend :
   la détermination, en fonction de la taille du bloc de données à coder correspondant à chaque TTI et de la taille du bloc de données à coder utilisé pour coder les données qui se trouvent dans les premières données et qui sont transmises à l'aide de la seconde ressource de fréquence, de la taille du bloc de données à coder utilisé pour coder les premières données.

3. Procédé (200) selon la revendication 1 ou 2, dans lequel la détermination, en fonction de la taille de chaque TTI et de la première ressource de fréquence utilisée pour transmettre les secondes données dans chaque TTI, d'une taille d'un bloc de données à coder correspondant à chaque TTI comprend :

   la détermination, sur la base d'une première ressource de fréquence utilisée pour transmettre les secondes données dans un $i^{ème}$ TTI dans les TTI, d'une taille d'un bloc de données à coder correspondant à un TTI de référence lorsque le $i^{ème}$ TTI correspond à une taille du TTI de référence, i étant un entier supérieur à 0 ; et
   la détermination, en fonction de la taille du bloc de données à coder correspondant au TTI de référence et d'une taille du $i^{ème}$ TTI, d'une taille d'un bloc de données à coder correspondant au $i^{ème}$ TTI.

4. Procédé de transmission d'informations (300), comprenant :

   la détermination (S310), par un dispositif de réseau, de ressources temps-fréquence utilisées pour transmettre des premières données, certaines ou toutes les ressources temps-fréquence étant en outre utilisées pour transmettre des secondes données ;

l'envoi (S320), à un dispositif qui doit transmettre les premières données, d'informations utilisées pour indiquer les ressources temps-fréquence, et d'un paramètre de transmission utilisé pour transmettre les secondes données ; et

l'exécution, par le dispositif qui doit transmettre les premières données, du procédé de transmission de données selon l'une quelconque des revendications 1 à 3.

5. Procédé (300) selon la revendication 4, dans lequel le paramètre de transmission comprend :
une taille d'un bloc de données à coder utilisé pour transmettre les secondes données et/ou une quantité d'intervalles de temps de transmission TTI utilisés pour transmettre les secondes données et/ou une taille de chaque TTI et/ou une première ressource de fréquence utilisée pour transmettre les secondes données dans chaque TTI et/ou une ressource temps-fréquence occupée par un canal de commande dans chaque TTI et/ou une ressource temps-fréquence occupée par un pilote dans chaque TTI.

6. Appareil de transmission de données (800), comprenant :

une unité d'obtention (810), configurée pour : obtenir des ressources temps-fréquence utilisées pour transmettre des premières données, certaines ou toutes les ressources temps-fréquence étant en outre utilisées pour transmettre des secondes données ; et obtenir un paramètre de transmission utilisé pour transmettre les secondes données ;
une unité de détermination (820), configurée pour déterminer, en fonction du paramètre de transmission obtenu par l'unité d'obtention (810), une taille d'un bloc de données à coder utilisé pour coder les premières données ;
une unité de codage (830), configurée pour coder les premières données en fonction de la taille du bloc de données à coder déterminée par l'unité de détermination (820) ; et
une unité de mappage (840), configurée pour mapper un bloc de données obtenu par l'unité de codage (830) à travers le codage aux ressources temps-fréquence ;
dans lequel le paramètre de transmission comprend une taille d'un bloc de données à coder utilisé pour transmettre les secondes données et/ou une quantité d'intervalles de temps de transmission TTI utilisés pour transmettre les secondes données et/ou une taille de chaque TTI et/ou une première ressource de fréquence utilisée pour transmettre les secondes données dans chaque TTI et/ou une ressource temps-fréquence occupée par un canal de commande dans chaque TTI et/ou une ressource temps-fréquence occupée par un pilote dans chaque TTI ; et
l'unité de détermination (820) étant spécifiquement configurée pour :

déterminer, en fonction de la taille de chaque TTI et de la première ressource de fréquence utilisée pour transmettre les secondes données dans chaque TTI, une taille d'un bloc de données à coder correspondant à chaque TTI ; et
déterminer, en fonction de la taille du bloc de données à coder correspondant à chaque TTI, la taille du bloc de données à coder utilisé pour coder les premières données.

7. Appareil (800) selon la revendication 6, dans lequel l'unité de traitement (820) est en outre configurée pour :

avant la détermination, en fonction de la taille du bloc de données à coder correspondant à chaque TTI, de la taille du bloc de données à coder utilisé pour coder les premières données, déterminer, en fonction de la première ressource de fréquence utilisée pour transmettre les secondes données dans chaque TTI, une seconde ressource de fréquence qui se trouve dans les ressources temps-fréquence et qui n'est pas utilisée pour transmettre les secondes données ; et
déterminer, sur la base de la seconde ressource de fréquence et des TTI correspondant aux ressources temps-fréquence, une taille d'un bloc de données à coder utilisé pour coder des données qui se trouvent dans les premières données et qui sont transmises à l'aide de la seconde ressource de fréquence ; et
respectivement, l'unité de détermination est spécifiquement configurée pour déterminer, en fonction de la taille du bloc de données à coder correspondant à chaque TTI et de la taille du bloc de données à coder utilisé pour coder les données qui se trouvent dans les premières données et qui sont transmises à l'aide de la seconde ressource de fréquence, la taille du bloc de données à coder utilisé pour coder les premières données.

8. Système comprenant un appareil de transmission de données (800) selon la revendication 6 ou 7 et un appareil de transmission d'informations (900), l'appareil de transmission d'informations (900) comprenant :

une unité de détermination (910), configurée pour déterminer des ressources temps-fréquence utilisées pour transmettre des premières données, certaines ou toutes les ressources temps-fréquence étant en outre utilisées pour transmettre des secondes données ; et

une unité d'envoi (920), configurée pour envoyer, à l'appareil de transmission de données (800), des informations qui sont utilisées pour indiquer les ressources temps-fréquence et qui sont déterminées par l'unité de détermination (910), et un paramètre de transmission utilisé pour transmettre les secondes données.

9. Support de stockage lisible par ordinateur, configuré pour stocker un programme informatique, le programme informatique comprenant des instructions utilisées pour exécuter le procédé (200, 300) selon l'une quelconque des revendications 1 à 5.

10. Programme informatique comprenant des instructions, lorsque le programme informatique est exécuté sur un ordinateur, l'ordinateur étant activé pour effectuer le procédé (200, 300) selon l'une quelconque des revendications 1 à 5.

100

120        110        130

FIG. 1

200

| Obtain time-frequency resources used to transmit first data, where some or all of the time-frequency resources are further used to transmit second data | S210 |

| Obtain a transmission parameter used to transmit the second data | S220 |

| Determine, based on the transmission parameter, a size of a to-be-encoded data block used to encode the first data | S230 |

| Encode the first data based on the size of the to-be-encoded data block | S240 |

| Map a data block obtained through the encoding to the time-frequency resources | S250 |

FIG. 2

300

A network device determines time-frequency resources used to transmit first data, where some or all of the time-frequency resources are further used to transmit second data
~ S310

Send, to a device that is to transmit the first data, information used to indicate the time-frequency resources, and a transmission parameter used to transmit the second data
~ S320

FIG. 3

First TTI

# # # # # # # # # # # # # #
0 1 2 3 4 5 6 7 8 9 10 11 12 13

Multiplexing area 1

Frequency band 1

Frame structure

Multiplexing area 2

Frequency band 2

Multiplexing area 3

Frequency band 3

Multiplexing area 4

Frequency band 4

FIG. 4

FIG. 5

Pilot

FIG. 6

Control channel

FIG. 7

FIG. 8

Apparatus 900

Determining unit 910

Sending unit 920

FIG. 9

Apparatus 1000

Processor 1010

Transceiver 1020

FIG. 10

Apparatus 1100

Processor 1110

Transceiver 1120

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZTE et al.** URLLC and eMBB frame structure and multiplexing. *3GPP DRAFT; R1-1611709 URLLC AND EMBB FS AND MULTIPLEXING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 10 October 2016, vol. RAN WG1, http://www.3gpp.org/ftp/tsg_ran/WG1-RL1/TSGR1_87/Docs
- **ZTE et al.** URLLC and eMBB frame structure and multiplexing. *3GPP DRAFT; R1-1608957 URLLC AND EMBB FS AND MULTIPLEXING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 01 October 2016, vol. RAN WG1, http://www.3gpp.org/ftp/tsg_ran/WG1_RL1/TSGR1_86b/Docs

- **INTERDIGITAL COMMLTNICATIONS.** Scheduling and support for service multiplexing. *3GPP DRAFT; R1-1612316, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 13 November 2016, vol. RAN WG1, http://www.3gpp.org/ftp/Meetings_3GPP_SYNC/RAN1/Docs